# EUROPÄISCHE PATENTSCHRIFT

(11) **EP 0 799 569 B1**
(45) Veröffentlichungstag und Bekanntmachung des Hinweises auf die Patenterteilung: **05.12.2001**
(21) Anmeldenummer: 97105518.1
(22) Anmeldetag: 03.04.1997
(51) Int. Cl.: A01N 25/26, A01N 43/88, A01N 43/18, A01N 43/16, A01N 39/02, A01N 37/48, A01N 35/10, A01N 33/12, B01J 8/24, B01J 2/00, B01J 2/02

(54) **Granulate hygroskopischer, wasserlöslicher Produkte**
Granules of hygroscopic, water-soluble products
Granulés des produits hygroscopes et solubles dans l'eau

(30) Priorität: 03.04.1996 DE 19613395
(43) Veröffentlichungstag der Anmeldung: 08.10.1997
(73) Patentinhaber: BASF AKTIENGESELLSCHAFT, 67056 Ludwigshafen (DE)
(72) Erfinder: Jäger, Karl-Friedrich, Dr., 67117 Limburgerhof (DE); Fricke, Hans-Michael, Dr., 67117 Limburgerhof (DE)
(74) Vertreter: Kinzebach, Werner, Dr.

(56) Entgegenhaltungen:
- EP-A- 0 388 867
- DE-A- 2 627 065
- DE-A- 3 248 504
- K. C. LIN: "Development of solid pesticide formulations by fluidized-bed technology" ACS SYMPOSIUM SERIES 'PESTICIDE FORMULATIONS' (B. CROSS & H. B. SCHER, EDS.), Nr. 371, 1988, WASHINGTON DC, Seiten 251-259, XP002049292
- M. ROSCH & R. PROBST: "Granulation in der Wirbelschicht" VERFAHRENSTECHNIK, Bd. 9, 1975, Seiten 59-64, XP002049293

## Beschreibung

Die Erfindung betrifft Granulate hygroskopischer, wasserlöslicher Produkte, ausgewählt unter Bentazonsalzen, sowie ein Verfahren zur Herstellung der Granulate.

Bei der Formulierung von Produkten mit biologischer Wirkung ist auch auf die Produktsicherheit gegenüber dem Anwender und der Umwelt zu achten. Weiter dürfen keine Probleme bei der Lagerung und beim Transport auftreten und die Entsorgung der Produktreste und der Verpackung muß zumindest den gegenwärtigen Erfordernissen genügen.

In vielen Bereichen haben sich Granulate als die optimale Formulierungsform erwiesen, welche die obigen Anforderungen erfüllt. Granulate sind meist staubarm und lagerstabil und bieten daher hohe Anwendersicherheit. Außerdem besitzen sie häufig ein relativ hohes Schüttgewicht, so daß, im Vergleich zu Lösungen, Suspensionen oder Pulverformulierungen, weniger Verpackungsmaterial aufgewendet werden muß.

Granulate lassen sich in bekannter Weise am zweckmäßigsten im Mischer, Extruder, Sprühturm oder in der Wirbelschicht herstellen. Wenn das zu granulierende Produkt jedoch hygroskopisch und klebrig ist, treten Probleme auf. Im Mischer oder Sprühturm lassen sich keine hochkonzentrierten Granulatformulierungen der geforderten Qualität und Korngröße herstellen. Vielmehr erhält man feinteilige Pulver, welche einen hohen Staubanteil aufweisen. Bei diesen Verfahren kommt es somit lediglich zu einer Entfernung des Lösungsmittels, ohne daß eine Granulierung erfolgt. Extruderverfahren sind wegen der hohen Klebrigkeit der feuchten Pulvermassen nicht durchführbar.

Die US-A-5,266,553 beschreibt ein derartiges Verfahren, nämlich ein Verfahren zur Herstellung eines wasserlöslichen Herbizidsalzes in trockener, fester Form, wobei das Wasser aus einer wässrigen Lösung eines Salzes eines Herbizides bei einer Temperatur von weniger als etwa 80°C entfernt wird. Die Entfernung des Wassers erfolgt mit Hilfe üblicher Vorrichtungen, nämlich einem diskontinuierlich. arbeitenden, horizontal angeordneten, zylindrischen Trockner, der mit an einer axial rotierenden Welle angebrachten Pflugschar und einem radial angeordneten Zerhackerwerkzeug ausgerüstet ist. Auf diese Weise wird das Herbizidsalz, z.B. das Natriumsalz von Bentazon, in Form eines frei-fließenden, kristallinen Pulvers erhalten, das sich vollständig und rasch in kaltem Wasser unter Bildung einer klaren Lösung löst. Es hat sich jedoch gezeigt, daß das Produkt einen großen Anteil feiner Teilchen aufweist und daher stark staubt.

Die Wirbelschichtgranulation ist eine häufig zur Anwendung kommende und gut untersuchte Methode zur Herstellung von Granulaten. Beispielsweise sind Anlagen und Betriebsweisen zur Granulation in der Wirbelschicht in Verfahrenstechnik 9 (1975), 59-64 beschrieben. In einer Firmenschrift der Glatt GmbH von 1986, Introduction to Fluid Bed Granulating, werden die Produkt- und Verfahrensvariablen untersucht, welche einen Einfluß auf das zu gewinnende Granulat haben. Die EP-A-0-388 867 und Liu K. C. (1998), Development of solid pesticide formulations by fluidized-bed technology, ACS SYMPOSIUM SERIES 'PESTICIDE FORMULATIONS' (B. CROSS & H. B. SCHER, EDS.), 371:251-259, beschreiben die Wirbelschichtgranulation wasserdispergierbarer und wasserlöslicher Pestizide. Die DE-A-26 27 065 beschreibt die Wirbelschichtgranulation diquarternärer Bipyridiliumsalze mit Hilfe wasserlöslicher oder -unlöslicher Verdünnungsmittel. In keiner dieser Publikationen wird auf die Granulierung eines hygroskopischen, klebrigen Produktes eingegangen.

Trotz aller Untersuchungen und Kenntnisse über die Granulation in der Wirbelschicht war es auch nach dieser Methode bisher nicht möglich, ein Granulat hygroskopischer, klebriger Produkte herzustellen. Bei der konventionellen Wirbelschichtgranulation unterscheidet man nämlich eine Feuchtgranulations- und eine Trocknungsphase. Während der Feuchtgranulationsphase steigt der Wassergehalt im Wirbelbett und es bauen sich die Granulatteilchen durch die Ausbildung von Flüssigkeitsbrücken bei gleichzeitiger Trocknung auf. In der Trocknungsphase werden die Flüssigkeitsbrücken fertiggetrocknet und die Granulatstruktur wird fixiert. Bei der Wirbelschichtgranulation hygroskopischer, klebriger Produkte kommt es dabei zur Bildung von Produktteilchen, deren Oberfläche mit einem Film aus einer gesättigten Lösung des zu granulierenden Produktes überzogen ist. Dieser Film bestimmt das Produktverhalten. Unter üblichen Betriebsbedingungen beobachtet man aufgrund der Verklebungsneigung starke Verklumpungen, so daß das Wirbelbett zusammenbricht oder es erfolgt keine ausreichende Trocknung des Produktes.

Der vorliegenden Erfindung liegt daher die Aufgabe zugrunde, Granulate hygroskopischer, wasserlöslicher Produkte, ausgewählt unter Bentazonsalzen, und ein Verfahren zur Herstellung dieser Granulate zur Verfügung zu stellen.

Überraschenderweise wurde nun gefunden, daß diese Aufgabe gelöst wird, wenn man eine Wirbelschichtgranulation unter Kontrolle der Produktfeuchte des Granulats durchführt.

Gegenstand der vorliegenden Erfindung sind daher Granulate hygroskopischer, wasserlöslicher Produkte, ausgewählt unter Bentazonsalzen, mit einer mittleren Korngröße im Bereich von 200 bis 2000 µm, wobei die Granulatkörner aus einem Agglomerat feiner Produktpartikel mit einer mittleren Teilchengröße im Bereich von 5 bis 200 µm, die mit einer Schicht des Produktes überzogen sind, bestehen.

Der Aufbau der erfindungsgemäßen Granulatkörner ist in den Figuren 1 bis 3 gezeigt, wobei
Figur 1 eine Schemazeichnung eines erfindungsgemäßen Granulatkorns (Natrium-Bentazon) darstellt,
Figur 2 die Aufnahme eines erfindungsgemäßen Granulatkorns (Natrium-Bentazon) mit einem Rasterelektronenmikroskop bei 130-facher Vergrößerung darstellt.
Figur 3 die Aufnahme eines erfindungsgemäßen Granulatkorns (Natrium-Bentazon) mit einem Rasterelektronenmikroskop bei 800-facher Vergrößerung darstellt.
Figur 4 ist eine graphische Darstellung eines Wirbelschichtgranulators, der zu Herstellung der erfindungsgemäßen Granulate geeignet ist.

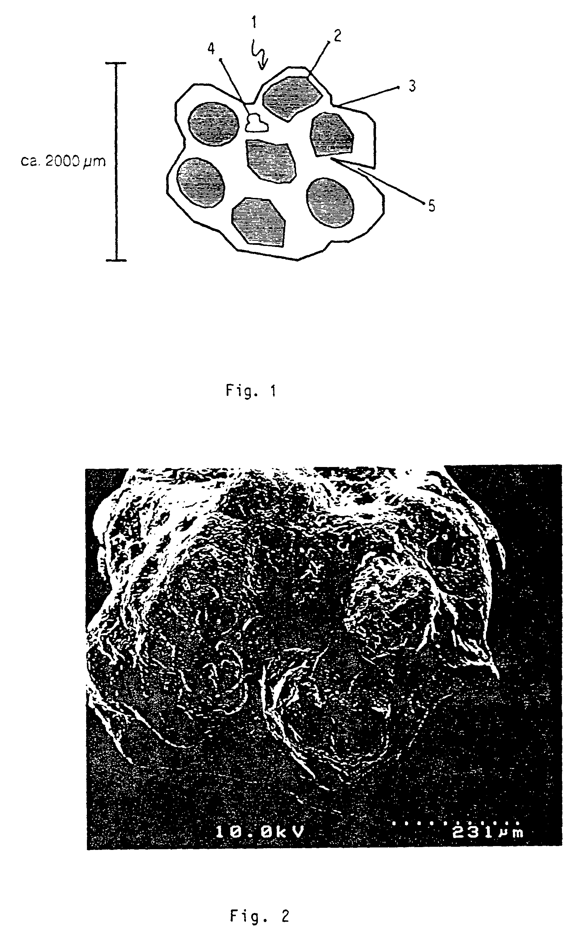

Der Fig. 1 ist zu entnehmen, daß ein Granulatkorn 1 mehrere Partikel 2 mit einer mittleren Teilchengröße im Bereich von 5 bis 200 µm umfasst. Diese Partikel sind über Feststoffbrücken aus erstarrtem hygroskopischem Produkt, die einen großen Teil der Partikeloberfläche bedecken und gegebenenfalls sogar eine Matrix bilden können, miteinander verbunden. Die Partikel bilden somit ein Agglomerat, das mit einer Schicht 3 des hygroskopischen Produktes überzogen ist (Coating). Die Granulatkörner besitzen eine im wesentlichen runde, kompakte Form und weisen kapillarwirksame Hohlräume 4 und Poren 5 auf. Die Fig. 2 zeigt dies besonders deutlich.

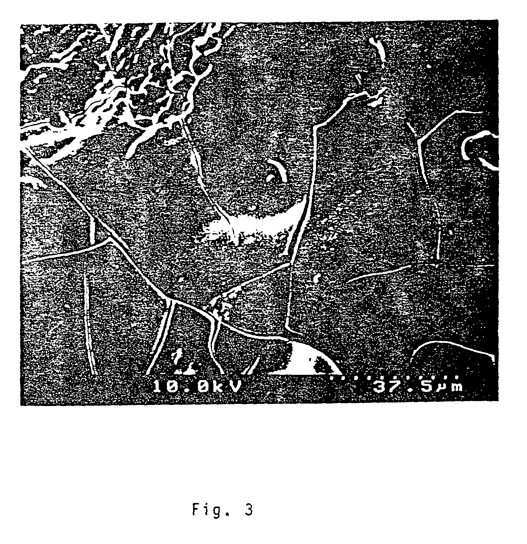

Aufgrund der Coating-Schicht sind die feinen Partikel gut in das Granulat eingebunden. Außerdem rundet die Coating-Schicht das Granulatkorn aus und sorgt für eine dichte, glatte Außenoberfläche, siehe Fig. 3. Das Granulat ist daher besonders abriebstabil. Die erwähnte Einbindung der Feinanteile und die Abriebstabilität haben zur Folge, daß das Granulat einen nur sehr geringen Staubgehalt aufweist. Der Staubanteil von < 0,1 mm, bestimmt nach Cipac MT170, "Trockensiebung von Granulaten" beträgt < 1%, insbesondere < 0,5%.

Die mittlere Korngröße des Granulats liegt im Bereich von 200 bis 2000 µm, vorzugsweise 500 bis 1500 µm, wobei mindestens 95 Gew.-% des Granulats eine Korngröße im Bereich von 0,1 mm bis 3,0 mm aufweisen.

Aufgrund der Korngröße und der engen Korngrößenverteilung ist das Granulat frei fließfähig. Außerdem werden die Kontaktoberflächen der Granulate untereinander minimiert. Dadurch wird die Klebrigkeit und Verbackungsgefahr des Granulats bei Handhabung in feuchter Luft minimiert. Somit ist das Granulat trotz der hygroskopischen Bestandteile in der Praxis auch bei feuchter Luft leicht und sicher zu dosieren.

Vorzugsweise besitzt das Granulat ein Schüttgewicht im Bereich von 300 bis 800 g/l, insbesondere 400 bis 800 g/l und bevorzugt 600 bis 800 g/l.

Aufgrund der im Granulatkorn vorhandenen Hohlräume und Poren bleibt trotz der dichten Coating-Schicht eine für eine rasche Auflösung des Granulats ausreichende Porosität erhalten. Wenn man das Granulat in einer Konzentration von 0,5 Gew.-% in Wasser von 20°C in einen sich langsam drehenden Standzylinder einbringt, löst es sich in weniger als 2 Minuten und insbesondere weniger als 1 Minute vollständig auf. Damit ist eine rasche, praxisgerechte Zubereitung einer wäßrigen Lösung oder Dispersion des Produktes gewährleistet.

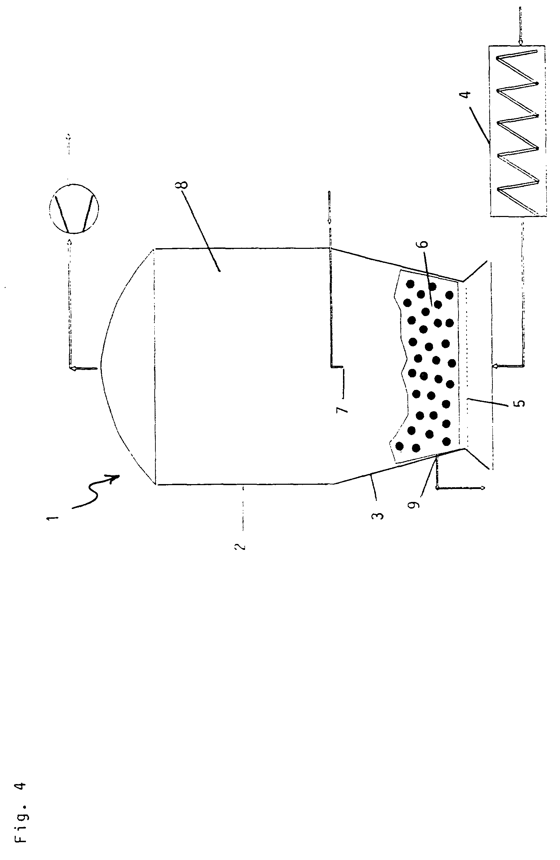

Nachfolgend wird die Herstellung der erfindungsgemäßen Granulate erläutert. Hierfür kann man übliche Vorrichtungen zur Wirbelschichtgranulation verwenden. Eine geeignete Vorrichtung ist in der Fig. 4 gezeigt, die im Beispiel 1 näher erläutert wird. Man geht aus von einer wässrigen Lösung oder Dispersion des hygroskopischen, wasserlöslichen (klebrigen) Bentazonsalzes, die im allgemeinen 20 bis 70 Gew.-% und insbesondere mindestens 40 Gew.-% des Bentazonsalzes (nachfolgend als Produkt bezeichnet) enthält. Die wäßrige Lösung oder Dispersion kann neben Wasser auch organische Lösungsmittel, beispielsweise Alkohole, wie Methanol, Ethanol oder Glykol, Ketone, wie Aceton oder Methylethylketon, Dimethylformamid oder Dimethylsulfoxid, enthalten. Vorzugsweise arbeitet man jedoch in einer rein wäßrigen Lösung oder Dispersion.

Die wäßrige Lösung oder Dispersion wird einer Wirbelschichtgranulation unterworfen, wobei man die wäßrige Lösung oder Dispersion entgegen der Strömungsrichtung des erhitzten Wirbelgases auf das Wirbelbett sprüht und die Temperatur und Menge des Wirbelgases, die Sprührate des Produktes und die Konzentration des Produktes in der wäßrigen Lösung oder Dispersion so wählt, daß die Produktfeuchte während der Granulation nicht mehr als etwa 50%, vorzugsweise nicht mehr als etwa 20% höher ist als die Restfeuchte des fertigen Granulats. Unter Produktfeuchte ist im vorliegenden Fall die Gesamtproduktfeuchte zu verstehen, also der Mittelwert der Feuchte des zu jedem Zeitpunkt im gesamten Wirbelbett vorhandenen Granulats.

Wenn man das Verfahren unter den oben angegebenen Bedingungen durchführt, ist nicht mehr, wie bei der konventionellen Wirbelschichtgranulation, zwischen der Feuchtgranulationsphase und der Trocknungsphase zu unterscheiden. Vielmehr wird das Verfahren nahe der Endrestfeuchte des Produktes in der Wirbelschicht betrieben.

Vorzugsweise führt man das Verfahren so durch, daß man bei einer Produktfeuchte von ≤ 6% und insbesondere ≤ 2% arbeitet.

Die Produktfeuchte läßt sich durch das Zusammenwirken von Temperatur- und Menge des Wirbelgases, der Sprührate des Produktes und der Konzentration des Produktes in der wäßrigen Lösung oder Dispersion steuern. Vorzugsweise arbeitet man dabei unter folgenden Bedingungen:

Eintrittstemperatur des Wirbelgases: 50 bis 220°C, insbesondere 70 bis 200°C.

Wirbelgasmenge: 10 bis 500 und insbesondere 50 bis 300 m³/min pro m² Anströmfläche des Wirbelbodens.

Die Sprührate und die Konzentration des Produktes in der wäßrigen Lösung oder Dispersion müssen dabei stets den jeweiligen Bedingungen angepaßt werden. Die geeigneten Werte können mittels weniger Routineversuche ermittelt werden.

Weiter hat es sich als vorteilhaft erwiesen, mit einer Wirbelbettfüllung von 50 bis 2000 kg/m² Fläche des Anströmbodens, vorzugsweise 100 bis 1000 kg/m² zu arbeiten. Mit Wirbelbettfüllung ist bei kontinuierlicher Verfahrensführung der "hold up" und beim Batch-Verfahren die Batchgröße d.h. die Füllmenge bei Granulationsende gemeint.

Zum Verdüsen der wäßrigen Lösung oder Dispersion benutzt man vorzugsweise eine oder mehrere Zweistoffdüsen oder Dreistoffdüsen, die mit einem inerten Gas, im allgemeinen Druckluft, von 1,2 bis 5,0 bar betrieben werden. Die Temperatur der Druckluft liegt im allgemeinen im Bereich von 15 bis 100°C.

Als besonders vorteilhaft hat sich erwiesen, die Düse in einem Abstand vom Anströmboden anzubringen, welcher dem 1,5 bis 10-fachen, insbesondere dem 2 bis 8-fachen, der Schichthöhe der ruhenden Wirbelbettfüllung entspricht. Ist die Düse zu nahe über der Wirbelschicht oder taucht die Düse in die Wirbelschicht ein, so treten starke Verklumpungen auf und das Wirbelbett bricht zusammen. Ist der Abstand der Düse zum Wirbelbett zu groß, so haben die fein verdüsten Partikel Zeit zum Antrocknen, so daß man im allgemeinen ein Pulver und kein Granulat, zumindest aber ein Produkt mit einem hohen Staubanteil erhält.

Das erfindungsgemäße Verfahren kann kontinuierlich oder batchweise durchgeführt werden.

Die Restfeuchte des erhaltenen Granulats ist vorzugsweise ≤ 4 Gew.-%, insbesondere ≤ 2 Gew.-% und besonders bevorzugt ≤ 1 Gew.-%.

Die in das Wirbelbett einzusprühende wäßrige Lösung oder Dispersion kann neben dem hygroskopischen Produkt gewünschtenfalls auch inerte Füllmaterialien, Netz- und Dispergiermittel, Bindemittel und/oder Zusatzstoffe, wie Konservierungsmittel und Farbstoffe, enthalten.

Als inerte Füllmaterialien kommen üblicherweise verwendete Füll- und Trägerstoffe in Betracht, beispielsweise anorganische Salze, wie Alkalimetall-, Magnesium- und Ammoniumchloride und -sulfate, insbesondere Magnesiumsulfat, Kaliumsulfat, Natriumsulfat, Kaliumchlorid, Ammoniumsulfat, Lithiumsulfat und Ammoniumchlorid, sowie Oxide, beispielsweise Magnesiumoxid, Nitrate, Carbonate, Hydrogencarbonate, Silicate, Talkum, Kreide, Quarzmehl, Kaolin, ferner Harnstoff und Harnstoffderivate, wie Hexamethylentetramin, Kohlehydrate, wie Stärke, Zucker, Alginate und deren Derivate, Getreidemehle wie Weizenmehl und Reismehl und schließlich wasserlösliche Polymere, wie Polyvinylalkohol und Polyvinylpyrrolidon.

Geeignete Netz- und Dispergiermittel sind anion- oder kationaktive, amphotere oder nicht-ionische oberflächenaktive Substanzen, insbesondere anionische Netzmittel, wie Kondensationsprodukte aus aromatischen Sulfonsäuren und Formaldehyd, Ligninsulfonsäuresalze, wie Natrium-, Kalium- und Ammoniumsalze der Ligninsulfonsäure, Alkylsulfonate sowie Polyoxyethylenfettsäureester, Polyoxyethylen-Fettalkoholether etc.

Als Bindemittel (Kleber), kommen insbesondere Polyvinylpyrrolidon, Polyvinylalkohol und Polyvinylacetat in Betracht.

Beispiele für geeignete Konservierungsmittel sind 2-Hydroxybiphenyl, Sorbinsäure, p-Hydroxybenzaldehyd, p-Hydroxybenzoesäuremethylester, p-Hydroxybenzoesäurepropylester und Benzoesäure.

Beispiele geeigneter Farbstoffe sind anorganische Pigmente wie Eisenoxid, Titandioxid und Ferrocyanblau und organische Farbstoffe, wie Alizarin-, Azo- und Metallphthalocyaninfarbstoffe.

Die Granulation kann in Luft oder inerten Gasen, wie Stickstoff, durchgeführt werden. Die Granulation kann in der leeren Wirbelbettapparatur angefahren werden, wobei zunächst feinteiliges Material als Granulationskerne erzeugt wird. Derartige Granulationskerne können jedoch auch in die Wirbelschichtapparatur gegeben werden, beispielsweise ein Pulver des zu granulierenden Produktes oder die oben genannten inerten Materialien. Ferner ist es möglich, daß man die Granulation in einer Wirbelschichtapparatur anfährt, in der bereits Startgranulat enthalten ist.

Die mit dem Abgas aus dem Wirbelbett entweichenden Feingutanteile werden in üblicher Weise abgeschieden, sie können als Keime für die Granulatbildung in das Wirbelbett zurückgeführt werden. Dabei ist sowohl eine interne als auch eine externe Feingutrückführung möglich. Für die Abscheidung der Feingutanteile und deren Rückführung können alle üblicherweise für derartige Zwecke eingesetzten Apparate verwendet werden.

Das fertige Granulat wird über eine oder mehrere geeignete Vorrichtungen ausgetragen. Hierfür kommen alle üblichen Vorrichtungen in Betracht, beispielsweise Gegenstrom-Schwerkraft-Sichter, Zick-Zack-Sichter oder Austrag über eine Klappe.

Erfindungsgemäß sind Granulate von allen hygroskopischen, wasserlöslichen und klebrigen Produkten herstellbar. Die erfindungsgemäßen Granulate sind insbesondere von Bedeutung bei Produkten mit biologischer Wirkung, wie Pflanzenbehandlungsmittel wie Pflanzenschutzmittel, ausgewählt unter Bentazonsalzen.

Bei den Bentazonsalzen handelt es sich insbesondere um die Alkalimetallsalze, wie das Natrium- oder Kaliumsalz, oder die Ammoniumsalze einschließlich der substituierten Ammoniumsalze, wie Hydroxyalkylammoniumsalz, Dihydroxyalkylammoniumsalz, Alkylammoniumsalz, Dialkylammoniumsalz oder Trialkylammoniumsalz.

Die erfindungsgemäßen Granulate enthalten das hygroskopische Produkt im allgemeinen in einer Menge von 40 bis 100 Gew.-% und insbesondere 60 bis 100 Gew.-%.

Gegenstand der vorliegenden Erfindung sind auch Zusammensetzungen, welche das erfindungsgemäße Granulat umfassen. Diese Zusammensetzungen können weitere übliche Formulierungs- und Zusatzstoffe sowie andere Wirkstoffe enthalten. Beispielsweise können die erfindungsgemäßen Zusammensetzungen neben einem Bentazonsalz auch Düngemittel, wie Ammoniumsulfat oder Harnstoffe, Wachstumsregulatoren, andere Pflanzenschutzmittel, Schädlingsbekämpfungsmittel etc. enthalten.

Als Formulierungsmittel und Zusatzstoffe kommen übliche Produkte, die für die anwendungstechnischen Eigenschaften und die optimale biologische Wirkung der Wirkstoffe erforderlich sind, in Betracht. Beispiele für derartige Formulierungshilfsmittel und Zusatzstoffe sind Antibackmittel, Fließhilfsmittel, etc.

Vorzugsweise jedoch kommen die erfindungsgemäßen Granulate ohne Hilfsstoffe und Zusatzstoffe zur Anwendung.

Die nachfolgenden Beispiele erläutern die Erfindung, ohne sie zu beschränken.

Die in den Beispielen beschriebenen Granulate wurden in einer Wirbelschichtvorrichtung der in Figur 4 gezeigten Art hergestellt. Es handelt sich dabei um einen üblichen Wirbelschichtgranulator 1, der einen zylindrischen Teil 2 und einen konischen Teil 3 umfaßt. Als Wirbelgas wurde Luft verwendet, die im Wärmetauscher 4 erhitzt und durch den Anströmboden 5 in das Wirbelbett 6 geleitet wurde. Das zu granulierende Produkt wurde in Form einer wäßrigen Lösung über eine Zweistoffdüse 7 auf das Wirbelbett 6 gesprüht. Der Feingutanteil wurde an den oberhalb der Zweistoffdüse 7 angebrachten Schlauchfiltern 8 abgeschieden und von Zeit zu Zeit mit Druckluft rückgespült. Die den Wirbelschichtgranulator verlassende Abluft wurde im Kreislauf wieder über den Wärmetauscher 4 geführt. Der Austrag des erhaltenen Granulats erfolgte über eine Austragsklappe 9.

### Beispiel 1

### Herstellung eines Natriumbentazon-Granulats

In einem Laborwirbelschichtgranulator der in Fig. 4 gezeigten Art wurden 190 g pulveriges Ammoniumsulfat vorgelegt und mit einer Zulufttemperatur von 120°C bei einer Zuluftmenge von 32 m³/h gewirbelt. 16 cm über dem Wirbelboden befand sich eine Zweistoffdüse. Der Wirbelboden hatte eine Anströmfläche von 153 cm².

414 g pulverförmiges Natriumbentazon wurden in 300 g Wasser gelöst. Diese Lösung wurde während 100 Minuten in das Wirbelbett eingesprüht und getrocknet. Die Zweistoffdüse wurde mit einem Preßluftdruck von 2 bar betrieben. Nach Beendigung des Einsprühens wurde die Heizung abgestellt und 1 Minute weiter gewirbelt. Danach wurde die Anlage abgestellt und das Produkt entnommen. Am Ende des Versuchs hatte das Produkt im Wirbelbett eine Betthöhe von 6 cm über dem Wirbelboden im Ruhezustand.

Das Produkt enthielt 68,9% Natriumbentazon und hatte eine Restfeuchte von 0,9%. Die Granulate besaßen runde, kompakte Agglomeratstrukturen der in den Figuren 1 bis 3 gezeigten Art. Die mittlere Korngröße betrug 0,36 mm. Das Produkt war nahezu staubfrei. Der Feinanteil im Produkt war 0,1% kleiner als 0,1 mm. Das Schüttgewicht hatte einen Wert von 741 g/l. Das Granulat löste sich innerhalb 1 Minute bei einer Konzentration von 0,5% in Wasser von 20°C in einem Standzylinder, der langsam gedreht wurde, vollständig auf. Das Produkt war frei fließfähig.

### Beispiel 2

### Kontinuierliche Granulation von Natriumbentazon

In einer Technikums-Wirbelschichtgranulieranlage der in Fig. 4 gezeigten Art wurden 79 kg Natriumbentazongranulat mit einem Gehalt von 99% Natriumbentazon und 1% Restfeuchte eingefüllt. Der Wirbelboden der Anlage hatte eine Anströmfläche von 0,26 m². Über dem Wirbelboden befand sich in einem Abstand von 140 cm eine Zweistoffdüse. Durch die Anlage wurde eine Zuluftmenge von 3000 kg Luft/h mit einer Eintrittstemperatur von 140°C gesaugt. In die wirbelnde Granulatschicht wurde über die Zweistoffdüse die wäßrige Natriumbentazonlösung in einer Konzentration von 55% mit einer Sprührate von 100 kg/h eingesprüht. Dies entspricht einer Wassereinsprühmenge von 45 kg/h. Die Zerstäubung durch die Zweistoffdüse erfolgte mit 100 kg/h Düsengas. Das Produkt wurde kontinuierlich mit einer Rate von 55 kg/h über eine Klappe in der Nähe des Siebbodens ausgetragen. Im Ruhezustand betrug die Betthöhe des Produkts 31,5 cm bezogen auf den Wirbelboden. Das ausgetragene Granulat hatte einen Gehalt von 99% Natriumbentazon und eine Restfeuchte von 1%. Die mittlere Granulatkorngröße war 0,5 mm; Feinanteile < 0,1 mm waren nicht enthalten. Das Schüttgewicht hatte einen Wert von 709 g/l. Das Granulat war staubfrei und abriebstabil. In einem Abriebtest wurde das Produkt in eine Glasflasche mit einer Drehzahl von 76 UpM während 3 Stunden in einem Taumelmischer beansprucht. Dabei entstanden 0,7% Abrieb mit einer Korngröße kleiner 0,05 mm. Die Granulatstruktur war ein rundes, kompaktes Agglomerat. Das Granulat löste sich in einem Standzylinder, der langsam gedreht wurde, bei einer Konzentration von 0,5% in Wasser von 10°C innerhalb 1 Minute vollständig auf. Das Produkt war frei fließfähig.

### Vergleichsbeisciel 1

Sprühtrocknung von Natriumbentazon mit einer Zweistoffdüse

In einem Technikumssprühturm wurde eine 55%ige wäßrige Lösung von Natriumbentazon mittels einer Zweistoffdüse versprüht und getrocknet. Die Turmeingangstemperatur der Trocknungsluft betrug 170°C, die Turmausgangstemperatur 90°C. Die Zweistoffdüse wurde mit einem Sprühdruck von 2 bar betrieben. Der Luftdurchsatz durch den Sprühturm betrug 360 m³/h, die Sprührate an Flüssigkeit 16 l/h.

In dem nachgeschalteten Zyklon wurde ein feines Natriumbentazonpulver mit 2,0% Restfeuchte erhalten. Das Pulver hatte ein Schüttgewicht von 673 g/l. Die Korngröße des Produktes war 100% kleiner als 0,1 mm. Das Produkt staubte stark.

Dieser Versuch zeigt, daß ein stark staubendes Produkt erhalten wird. Es wurde kein Granulat gebildet.

### Vergleichsbeispiel 2

### Trocknung von Natriumbentazon im Vakuummischer

In einem Chargen-Vakuum-Mischer (Fa. Littleford) mit 130 l Volumen wurden 70 kg wäßrige Natriumbentazonlösung (56% G/G) eingefüllt. Der Mischer verfügte über einen heizbaren, zylindrischen Behälter. Im Innern des Mischers befand sich axial angeordnet ein rotierendes Mischwerkzeug mit Pflugscharen. An der Behälterwand war radial ein Zerhackerwerkzeug, das mit hohen Drehzahlen betrieben werden konnte, angebracht. Bei 60°C wurde der Mischer unter Vakuum betrieben, bis 30,7 kg Wasser verdampft waren. Man erhielt ein Produkt mit 0,4% Restwassergehalt und einem Schüttgewicht von 0,7 kg/l. Das Produkt enthielt einen großen Pulveranteil (30% kleiner 0,15 mm) und zeigte starkes Stauben.

Dieser Versuch wurde im wesentlichen analog zu Beispiel 8 der US 5,266,553 durchgeführt. Es ist ersichtlich, daß kein Granulat, sondern ein stark staubendes Produkt erhalten wurde.

### Vergleichsbeispiel 3

### Granulationsversuch in einem V-Mischer

In einem Labor V-Mischer (Fa. PK-Niro) mit Zerhackerwelle und integrierter Flüssigdosiervorrichtung wurden 4125 g Natriumbentazonpulver aus Vergleichsbeispiel 1 gemischt. Der Mischer lief mit einer Drehzahl von 60 UpM. Die Zerhackerwelle wurde mit einer Drehzahl von 1100 UpM betrieben. Über die Zerhackerwelle wurden langsam 768 g wäßrige Natriumbentazonlösung (56% G/G) eingetragen. Feuchtgranulate waren während dieses Eintragsvorgangs nicht zu erkennen. Durch die Zerhackerwelle wird Energie eingetragen. Bei einer Temperatur von 43°C ergab sich am Ende des Flüssigkeitseintrags ein scharfer Übergang von feuchtem, nicht granuliertem Pulver in eine zähe Masse. Ein Granulat war nicht herstellbar.

## Patentansprüche

1. Granulat eines wasserlöslichen, hygroskopischen Produktes, ausgewählt unter Bentazonsalzen, mit einer mittleren Korngröße im Bereich von 200 bis 2000 µm, wobei die Granulatkörner aus einem Agglomerat feiner Produktpartikel mit einer mittleren Teilchengröße im Bereich von 5 bis 200 µm, das mit einer Produktschicht überzogen ist, bestehen.

2. Granulat nach Anspruch 1, **dadurch gekennzeichnet, daß** die mittlere Korngröße im Bereich von 500 bis 1500 µm liegt.

3. Granulat nach Anspruch 1 oder 2, **dadurch gekennzeichnet, daß** es ein Schüttgewicht im Bereich von 300 bis 800 g/l aufweist.

4. Granulat nach einem der vorhergehenden Ansprüche, **dadurch gekennzeichnet, daß** es sich bei einer Konzentration von 0,5 Gew.-% in weniger als 2 Minuten in Wasser von 20°C löst.

5. Granulat nach einem der vorhergehenden Ansprüche, **dadurch gekennzeichnet, daß** die Restfeuchte ≤ 4 Gew.-%, insbesondere ≤ 2 Gew.-% ist.

6. Granulat nach einem der vorhergehenden Ansprüche, **dadurch gekennzeichnet, daß** es sich bei den Bentazonsalzen um Natrium- oder Kalium-Bentazon handelt.

7. Granulat nach Anspruch 6, **dadurch gekennzeichnet, daß** das Schüttgewicht mindestens 600 g/l beträgt.

8. Granulat nach einem der vorhergehenden Ansprüche, **dadurch gekennzeichnet, daß** das Agglomerat Teilchen eines inerten Materials oder eines anderen Produktes mit biologischer Wirkung umfaßt.

9. Granulat nach einem der vorhergehenden Ansprüche, **dadurch gekennzeichnet, daß** es auch Netzmittel, Dispergiermittel und/ oder Bindemittel umfasst.

10. Granulat nach einem der vorhergehenden Ansprüche, **dadurch gekennzeichnet, daß** der Anteil des hygroskopischen Produktes im Granulat im Bereich von 20 bis 100 Gew.-% liegt.

11. Verfahren zur Herstellung der Granulate nach einem der Ansprüche 1 bis 10, **dadurch gekennzeichnet, daß** man eine wäßrige Lösung des hygroskopischen Produktes einer Wirbelschichtgranulation unterwirft, wobei man die wäßrige Lösung entgegen der Strömungsrichtung des erhitzten Wirbelgases auf das Wirbelbett sprüht und die Temperatur und Menge des Wirbelgases, die Sprührate des Produktes und die Konzentration des Produktes in der wäßrigen Lösung oder Dispersion so wählt, daß die Produktfeuchte während der Granulation nicht mehr als etwa 50% höher ist als die Restfeuchte des fertigen Granulats.

12. Verfahren nach Anspruch 11, **dadurch gekennzeichnet, daß** die Produktfeuchte ≤ 6 Gew.-% und insbesondere ≤ 2 Gew.-% ist.

13. Verfahren nach Anspruch 11 oder 12, **dadurch gekennzeichnet, daß** die Temperatur des Wirbelgases im Bereich von 50 bis 220°C liegt.

14. Verfahren nach einem der Ansprüche 11 bis 13, **dadurch gekennzeichnet, daß** die Wirbelgasmenge 10 bis 500 m³/min pro m² Anströmfläche des Wirbelbodens beträgt.

15. Verfahren nach einem der Ansprüche 11 bis 14, **dadurch gekennzeichnet, daß** der Abstand der Düse, aus welcher die wäßrige Lösung oder Dispersion des hygroskopischen Produktes auf das Wirbelbett gesprüht wird, das 1,5 bis 10-fache der Schichthöhe der ruhenden Wirbelbettfüllung beträgt.

16. Zusammensetzung, umfassend ein Granulat nach einem der Ansprüche 1 bis 10.

## Claims

1. A granule of a water-soluble, hygroscopic product selected from amongst bentazone salts and having a mean grain size in the range from 200 to 2000 µm, the granule grain consisting of an agglomerate of fine product particles having a mean particle size in the range from 5 to 200 µm, which is covered with a product layer.

2. A granule as claimed in claim 1, wherein the mean grain size is in the range from 500 to 1500 µm.

3. A granule as claimed in claim 1 or 2, which has a bulk weight in the range from 300 to 800 g/l.

4. A granule as claimed in one of the preceding claims, which dissolves in water at 20°C in less than 2 minutes at a concentration of 0.5 % by weight.

5. A granule as claimed in one of the preceding claims, wherein the residual moisture is ≤ 4 % by weight, in particular ≤ 2 % by weight.

6. A granule as claimed in one of the preceding claims, the bentazone salts being sodium or potassium bentazone.

7. A granule as claimed in claim 6, wherein the bulk weight is at least 600 g/l.

8. A granule as claimed in one of the preceding claims, wherein the agglomerate comprises particles of an inert material or of another product having biological action.

9. A granule as claimed in one of the preceding claims, which also comprises wetting agents, dispersants and/or binders.

10. A granule as claimed in one of the preceding claims, wherein the proportion of the hygroscopic product in the granule is in the range from 20 to 100 % by weight.

11. A process for preparing the granules as claimed in one of claims 1 to 10, which comprises subjecting an aqueous solution of the hygroscopic product to fluidized-bed granulation, the aqueous solution being sprayed onto the fluidized bed against the direction of flow of the heated fluidized gas, and the temperature and amount of the fluidized gas, the spray rate of the product and the concentration of the product in the aqueous solution or dispersion being selected such that the product moisture during the granulation is not more than approximately 50 % higher than the residual moisture of the finished granules.

12. A process as claimed in claim 11, wherein the product moisture is ≤ 6 % by weight and in particular ≤ 2 % by weight.

13. A process as claimed in claim 11 or 12, wherein the temperature of the fluidized gas is in the range from 50 to 220°C.

14. A process as claimed in one of claims 11 to 13, wherein the fluidized gas amount is from 10 to 500 m³/min per m² of incident flow area of the fluidizing base.

15. A process as claimed in one of claims 11 to 14, wherein the distance of the nozzle from which the aqueous solution or dispersion of the hygroscopic product is sprayed onto the fluidized bed is 1.5- to 10-times the height of the layer of the resting fluidized bed packing.

16. A composition comprising granules as claimed in one of claims 1 to 10.

## Revendications

1. Granulés d'un produit hydroscopique soluble dans l'eau choisi parmi les sels de la Bentazone, à une dimension de grain moyen dans l'intervalle de 200 à 2000 µm, les grains consistant en un agglomérat de particules fines du produit à une dimension de particule moyenne dans l'intervalle de 5 à 200 µm, revêtu d'une couche du produit.

2. Granulés selon la revendication 1, **caractérisés par le fait que** la dimension de grain moyen se situe dans l'intervalle de 500 à 1500 µm.

3. Granulés selon la revendication 1 ou 2, **caractérisés par le fait qu'**ils ont une densité apparente dans l'intervalle de 300 à 800 g/l.

4. Granulés selon une des revendications qui précèdent, **caractérisés par le fait qu'**ils se dissolvent à une concentration de 0,5 % en poids en moins de 2 minutes dans l'eau à 20° C.

5. Granulés selon l'une des revendications qui précèdent, **caractérisés par le fait que** l'humidité résiduelle est inférieure ou égale à 4 % en poids et plus spécialement inférieure ou égale à 2 % en poids.

6. Granulés selon l'une des revendications qui précèdent, **caractérisés par le fait que** le sel de Bentazone consiste en le sel de sodium ou le sel de potassium de la Bentazone.

7. Granulés selon la revendication 6, **caractérisés par le fait que** la densité apparente est d'au moins 600 g/l.

8. Granulés selon l'une des revendications qui précèdent, **caractérisés par le fait que** l'agglomérat comprend des particules d'une matière inerte ou d'un autre produit possédant une activité biologique.

9. Granulés selon l'une des revendications qui précèdent, **caractérisés par le fait qu'**ils contiennent également des agents mouillants, des agents dispersants et/ou des liants.

10. Granulés selon l'une des revendications qui précèdent, **caractérisés par le fait que** la proportion du produit hygroscopique dans les granulés se situe dans l'intervalle de 20 à 100 % en poids.

11. Procédé de préparation des granulés selon l'une des revendications 1 à 10, **caractérisé par le fait que** l'on soumet une solution aqueuse du produit hygroscopique à une granulation en lit tourbillonnaire, dans laquelle on pulvérise la solution aqueuse sur le lit tourbillonnaire à contre-courant de l'écoulement du gaz fluidisant chauffé et on règle la température et la quantité du gaz fluidisant, le débit de pulvérisation du produit et la concentration du produit dans la solution ou dispersion aqueuse en sorte que l'humidité du produit au cours de la granulation ne dépasse pas de plus d'environ 50 % l'humidité résiduelle des granulés finis.

12. Procédé selon la revendication 11, **caractérisé par le fait que** l'humidité du produit est inférieure ou égale à 6 % en poids et plus spécialement inférieure ou égale à 2 % en poids.

13. Procédé selon la revendication 11 ou 12, **caractérisé par le fait que** la température du gaz fluidisant se situe dans l'intervalle de 50 à 220° C.

14. Procédé selon l'une des revendications 11 à 13, **caractérisé par le fait que** le débit du gaz fluidisant est de 10 à 500 m³/minute par m² de la surface d'alimentation du plateau tourbillonnaire.

15. Procédé selon l'une des revendications 11 à 14, **caractérisé par le fait que** la distance du gicleur à partir duquel la solution ou dispersion aqueuse du produit hygroscopique est pulvérisée sur le lit tourbillonnaire représente de 1,5 à 10 fois la hauteur de couche du garnissage du lit tourbillonnaire au repos.

16. Composition comprenant des granulés selon l'une des revendications 1 à 10.
